# EUROPÄISCHE PATENTANMELDUNG

(11) **EP 3 254 569 A1**
(43) Veröffentlichungstag der Anmeldung: **13.12.2017**
(21) Anmeldenummer: 16173690.5
(22) Anmeldetag: 09.06.2016
(51) Int. Cl.: A23L 13/40, A23L 29/10, A23L 29/20, A23L 29/212, A23L 29/231, A23L 29/238, A23L 29/256, A23L 29/269, A23L 29/262, A23L 13/60

(54) **VERFAHREN ZUR HERSTELLUNG VON HYDROKOLLOID MIT ERHÖHTEM WASSERBINDEVERMÖGEN**

(71) Anmelder: Deutsches Institut für Lebensmitteltechnik e.V., 49610 Quakenbrück (DE)
(72) Erfinder: Albers, Dieter, 49214 Bad Rothenfelde (DE); Aganovic, Kemal, 49610 Quakenbrück (DE); Franke, Knut, 49610 Quakenbrück (DE)
(74) Vertreter: Taruttis, Stefan Georg

(57) **Zusammenfassung**

Die Erfindung beschreibt ein Verfahren zur Herstellung eines Hydrokolloids mit erhöhtem Wasserbindevermögen, bei dem das Hydrokolloid in Mischung mit Wasser durch eine Hochdruckhomogenisation von zumindest 100 MPa behandelt wird.

## Beschreibung

Die vorliegende Erfindung betrifft ein Verfahren zur Herstellung eines Hydrokolloids, das insbesondere ein Polysaccharid ist, das im Vergleich zu dem Hydrokolloid, das nicht mit dem erfindungsgemäßen Verfahren behandelt wurde, in einem Gel ein höheres und/oder stabileres Wasserbindevermögen aufweist, und insbesondere eine geringere Synärese und/oder eine höhere Gelfestigkeit aufweist. Das Verfahren hat den Vorteil, dass das Hydrokolloid nicht chemisch behandelt wird und durch das Verfahren keine zusätzlichen chemischen Gruppen in natürliches Hydrokolloid eingebracht werden.

Entsprechend betrifft die Erfindung auch das mit dem Verfahren hergestellte Hydrokolloid, sowie dessen Verwendung insbesondere als Zusatzstoff zu Lebensmitteln, z.B. als Verdickungsmittel in flüssigen und pastösen Lebensmitteln und/oder zur Wasserbindung in festen Lebensmitteln. Weiter betrifft die Erfindung die Herstellung von Lebensmitteln mit dem Schritt des Zusetzens des mit dem Verfahren hergestellten Hydrokolloids, sowie Lebensmittel mit einem Gehalt an dem mit dem Verfahren hergestellten Hydrokolloid.

Die US 4,096,327 A beschreibt die chemische Modifikation von κ(kappa)-Carrageen durch Einführung von C₂- bis C₃-Hydroxyalkylgruppen, um eine geringere Synärese und einen um 10-20 °C niedrigeren Schmelzpunkt des entsprechenden Gels zu erreichen.

Die US 2008/0317789 A1 beschreibt ausgehend von gefälltem Carrageen, das aus Seetang-Extrakt erzeugt wurde, die Herstellung von (t)jota-Carrageen mit geringerem Gehalt an Kationen, um einen niedrigeren Schmelzpunkt des entsprechenden Gels zu erreichen.

### Aufgabe der Erfindung

Der Erfindung stellt sich die Aufgabe, ein alternatives Verfahren zur Herstellung eines Hydrokolloids anzugeben, das eine geringere Neigung zur Synärese und bevorzugt ein höheres Bindevermögen für Wasser aufweist. Bevorzugt soll das Verfahren keine chemischen Gruppen in natürliches Hydrokolloid einführen.

### Beschreibung der Erfindung

Die Erfindung löst die Aufgabe mit den Merkmalen der Ansprüche und insbesondere durch ein Verfahren, bei dem Hydrokolloid in Mischung mit Wasser, optional eine Lösung des Hydrokolloids, durch eine Hochdruckhomogenisation behandelt wird, die eine Entspannung über eine Druckdifferenz von zumindest 100 MPa, bevorzugt zumindest 200 MPa oder zumindest 400 MPa durch eine Düse umfasst oder daraus besteht. Erfindungsgemäß bevorzugt wird das Hydrokolloid in Mischung mit Wasser mit der gesamten Druckdifferenz beaufschlagt und unmittelbar anschließend wird die Druckdifferenz durch zumindest eine Düse entspannt. Die Hochdruckhomogenisation kann einstufig durch Entspannung der Druckdifferenz durch genau eine Düse sein oder zumindest zweistufig durch Entspannung durch zumindest zwei aufeinander folgende Düsen, durch die insgesamt die gesamte Druckdifferenz entspannt wird. Bei einer zumindest zweistufigen Entspannung der Druckdifferenz ist bevorzugt, dass über jede Düse eine Druckdifferenz von zumindest 1 MPa, bevorzugter zumindest 5 bis 10 MPa entspannt wird. Bevorzugt wird die Druckdifferenz bis auf Umgebungsdruck entspannt. Bei einer zumindest zweistufigen Entspannung der Druckdifferenz kann eine Leitung zwischen den Düsen das Hydrokolloid in Mischung mit Wasser führen.

Das Hydrokolloid kann Xanthan, Stärke, Agar-Agar, Alginat, Johannisbrotkernmehl, Guarkernmehl, Pektin, Cellulose, Carboxymethylcellulose, Methylcellulose, Hydroxymethylcellulose, bevorzugt Carrageen, oder eine Mischung von zumindest zweien dieser sein. Für das Herstellen einer Mischung von zumindest zwei Hydrokolloiden kann jedes Hydrokolloid einzeln in Mischung mit Wasser mit dem Verfahren behandelt werden, wobei die behandelten Hydrokolloide anschließend gemischt werden. Alternativ kann eine Mischung von zumindest zwei Hydrokolloiden in Wasser hergestellt und anschließend mit dem Verfahren behandelt werden. Bevorzugte Mischungen von Hydrokolloiden sind kappa-Carrageen mit Johannisbrotkernmehl, bevorzugt zu 70 Gew.-Teilen kappa-Carrageen mit 30 Gew.-Teilen Johannisbrotkernmehl, kappa-Carrageen mit Xanthan, bevorzugt zu 80 Gew.-Teilen kappa-Carrageen mit 20 Gew.-Teilen Xanthan, Alginat mit Pektin, bevorzugt zu 95 Gew.-Teilen Alginat mit 5 Gew.-Teilen Pektin.

Die Düse kann eine herkömmliche Düse eines Hochdruckhomogenisators sein, durch die eine Flüssigkeit tritt, während eine Druckdifferenz, mit der eine Flüssigkeit beaufschlagt ist, entspannt wird.

Die Mischung des Hydrokolloids mit Wasser kann eine Suspension sein oder eine Lösung. Optional kann die Erwärmung der Mischung des Hydrokolloids mit Wasser auf eine Temperatur, die zum Lösen des Hydrokolloids ausreicht, durch Beaufschlagen mit der Druckdifferenz, die anschließend mit Durchtritt durch die Düse entspannt wird, und insbesondere durch den Durchtritt der Mischung durch die Düse bei der Entspannung der Druckdifferenz erreicht werden. Die Temperaturerhöhung durch das Beaufschlagen der Mischung des Hydrokolloids mit Wasser auf die Druckdifferenz beträgt ca. 2 bis 3 K je 100 MPa, die Temperaturerhöhung durch das Entspannen der Druckdifferenz beträgt ca. 15 bis 20 K je 100 MPa. Optional kann die Mischung des Hydrokolloids mit Wasser vor der Beaufschlagung mit der Druckdifferenz eine Temperatur aufweisen, die durch die Temperaturerhöhung durch das Beaufschlagen mit der Druckdifferenz und die anschließende Entspannung der Druckdifferenz zu einer Temperatur führt, bei der das Hydrokolloid in Lösung ist. Bevorzugt ist die Temperatur der Mischung diejenige, die nach der Entspannung durch die zumindest eine Düse gemessen wird, z.B. in einem Auffangbehälter. Für κ-Carrageen beträgt die Mindesttemperatur für das Lösen in Wasser 55 °C. So hat sich gezeigt, dass κ-Carrageen in Suspension in Wasser bei 15 °C durch das anschließende Verfahren auf eine Temperatur erwärmt wird, bei der es in Lösung ist, wenn die Druckdifferenz, über die entspannt wird, mindestens 200 MPa beträgt. Das Verfahren führt zu einem Hydrokolloid, das bei Raumtemperatur ein Gel mit einem deutlich höheren Wasserbindevermögen, einer deutlich geringeren Synärese und einem deutlich höheren Speichermodul G' als Maß für die Gelfestigkeit bildet.

Bevorzugt weist die Mischung des Hydrokolloids mit Wasser keine Zusätze auf, so dass das Wasser reines Wasser, z.B. entionisiertes oder destilliertes Wasser sein kann, oder Trinkwasser.

Das Carrageen kann kappa-Carrageen, jota-Carrageen, lambda-Carrageen oder eine Mischung von zumindest zweien dieser sein, bevorzugt ist das Carrageen kappa(κ)-Carrageen, das im Wesentlichen aus D-Galactose und 3,6-Anhydro-6-galactose besteht, die abwechselnd β1-4 und α1-3 glycosidisch aneinander gebunden sind, optional teilweise mit Sulfatgruppen verestert. Das Carrageen ist bevorzugt aus Rotalgen, z.B. *Eucheuma spinosatrna* und *Eucheuma cottonii,* durch wässrige Extraktion mit Alkali, Abtrennung ungelöster Bestandteile und Fällung aus der löslichen Phase, z.B. mit Salz, insbesondere KCl, und/oder mit Alkohol, insbesondere Isopropanol, hergestellt.

Generell ist bevorzugt, das Hydrokolloid in Wasser bei einer Temperatur unterhalb der Mindesttemperatur für das Lösen einzumischen, z.B. bei 0 bis 40 °C, und anschließend diese Mischung auf zumindest die Mindesttemperatur für das Lösen zu erwärmen, bevorzugt durch die Beaufschlagung mit der Druckdifferenz und deren anschließende Entspannung.

Die wässrige Mischung von Carrageen kann eine bei der Extraktion von Carrageen aus Rotalgen hergestellte Mischung sein, ohne zwischenzeitliches Trocknen, oder kann durch Mischen von getrocknetem Carrageen, insbesondere κ-Carrageen, in Wasser hergestellt sein. Die wässrige Mischung des Hydrokolloids, z.B. von Carrageen, enthält bevorzugt 1 bis 10 Gew.-% Hydrokolloid, bevorzugter 2 bis 4 Gew.-%.

Das Verfahren kann den Schritt des Trocknens der Lösung nach der Hochdruckhomogenisation aufweisen, z.B. durch Sprühtrocknen, Wirbelschichttrocknen oder Gefriertrocknen. Für das Sprühtrocknen und Wirbelschichttrocknen ist bevorzugt, dass die Lösung unmittelbar nach der Entspannung der Druckdifferenz getrocknet wird, ohne zusätzliche Kühlung nach der Entspannung. Bevorzugt wird bei der Wirbelschichttrocknung die hochdruckhomogenisierte Lösung des Hydrokolloids auf einen lebensmittelgeeigneten Träger aufgesprüht, z.B. Dextrose und/oder Lactose.

Optional kann das Verfahren vorsehen, die Lösung nach der Entspannung der Druckdifferenz in Form einer Lösung ohne zwischenzeitliche Trocknung zu einer Lebensmittelmasse zuzusetzen.

Das Verfahren führt zu einer Erhöhung der Gelstärke und Gelstabilität des Hydrokolloids, so dass z.B. die Synärese verringert ist und das Speichermodul G' erhöht ist und daher für dieselbe Gelfestigkeit ein geringerer Zusatz des Hydrokolloids ausreicht.

Das Verfahren wird nun genauer anhand von Beispielen erläutert, in denen κ-Carrageen als stellvertretendes Hydrokolloid hochdruckhomogenisiert wurde und jeweils zum Vergleich (Kontrolle, unbehandelt) das ursprüngliche κ-Carrageen derselben Charge verwendet wurde, das nicht hochdruckhomogenisiert wurde. Dabei zeigt die
- Figur 1 Messwerte für die Synärese von Gelen mit erfindungsgemäß hergestelltem Carrageen und zum Vergleich (unbehandelt) von Gelen mit dem ursprünglichen Carrageen und
- Figur 2 Messwerte für das Speichermodul für Kochwurst mit einem Gehalt an erfindungsgemäß hergestelltem Carrageen und zum Vergleich für Kochwurst mit unbehandeltem Carrageen (Kontrolle).

### Beispiel 1: Herstellung von Hydrokolloid mit erhöhtem Wasserbindevermögen

Als Beispiel für ein Hydrokolloid wurde kappa-Carrageen, erhältlich von Eurogum A/S, Herlev, Dänemark, zu 3 Gew.-% in Leitungswasser manuell dispergiert. Die Wassertemperatur wurde so gewählt, dass nach Druckaufbau und -entspannen mindestens die Lösetemperatur dieses Hydrokolloids von 55 °C erreicht wurde. Diese Dispersion wurde über eine Druckdifferenz von 100 MPa, 200 MPa oder 300 MPa hochdruckhomogenisiert. Dazu wurde ein Hochdruckhomogenisator (Stansted Fluid Power, Großbritannien, Modell FPG11300:350) eingesetzt, der die Druckdifferenz des Carrageens in Wasser über zwei nacheinander angeordnete Hochdruckventile als Düsen entspannt. Durch das Verfahren wurde die Mischung aus Carrageen in Wasser von anfänglichen ca. 20 °C bei einer Druckdifferenz von 300 MPa auf ca. 70 °C erwärmt, die nach dem Durchtritt durch die Düsen gemessen wurde. Die erhaltene Lösung des behandelten Carrageens wurde auf Raumtemperatur abkühlen gelassen.

Die Wasserimmobilisierung des behandelten Carrageens und zum Vergleich des ursprünglich eingesetzten Carrageens, das zur Herstellung einer Lösung mittels eines Wärmetauschers auf ca. 70 °C erwärmt wurde, wurde durch Zentrifugation gemessen. Dazu wurden jeweils erstarrte Gele mit 2, 3, 4 oder 5 Gew.-% Carrageen in Wasser bei 20 °C über 10 min bei 10.000 x g zentrifugiert. Anschließend wird das abzentrifugierte Wasser abgenommen, ausgewogen und als nicht immobilisiertes Wasser betrachtet.

Anteil aus Gel abzentrifugierten Wassers in g/100g Gesamtwassergehalt des Gels:

| Homogenisierdruck (MPa) | Konzentration an κ-Carrageen (Gew./Gew.) | | | |
|---|---|---|---|---|
| | 2 % | 3 % | 4 % | 5 % |
| ohne (Kontrolle) | 8,37 | 6,75 | 6,63 | 8,66 |
| 100 | 6,77 | 6,69 | 5,34 | 3,11 |
| 200 | 4,36 | 1,73 | 4,89 | 3,10 |
| 300 | 3,35 | 2,87 | 4,07 | 5,79 |

Es wird deutlich, dass der abzentrifugierbare Wasseranteil, der also nicht im Gelnetzwerk immobilisiert ist, im Gel mit dem ursprünglichen bzw. unbehandelten Carrageen (Kontrolle) höher liegt als bei den Gelen mit erfindungsgemäß hochdruckhomogenisiertem Carrageen. Bei einem Homogenisierungsdruck von zumindest 200 MPa oder 300 MPa, insbesondere bei 2% und 3%igen Gelen, liegt der Anteil abzentrifugierbaren Wassers deutlich niedriger als bei dem Kontrollgel.

Durch Wahl einer geeigneten Anfangstemperatur der Mischung aus Hydrokolloid und Wasser vor dem Beaufschlagen mit der Druckdifferenz, über die anschließend bei der Hochdruckhomogenisation entspannt wird, kann die Wasserimmobilisierung des behandelten Hydrokolloids beeinflusst werden. Die nachfolgende Tabelle zeigt, dass der abzentrifugierbare Wasseranteil bei 3 Gew.-%-igen Gelen (20 °C, 10.000 x g, 10 min) mit demselben κ-Carrageen bei Hochdruckhomogenisierung bei niedrigeren Temperaturen der Ausgangsmischung für die Hochdruckhomogenisierung niedriger wird.

| Druckdifferenz bzw. Homogenisierdruck (MPa) | Anfangstemperatur der Lösung | | | |
|---|---|---|---|---|
| | 20 °C | 30 °C | 40 °C | 50 °C |
| 100 | 10,03 | 6,69 | 3,40 | 4,32 |
| 200 | 3,01 | 1,73 | 2,26 | 3,82 |
| 300 | 2,00 | 2,87 | 4,63 | n.g.* |

| | | | | |
|---|---|---|---|---|
| * nicht gemessen | | | | |

Bei Gelen mit den erfindungsgemäß behandelten Hydrokolloiden zeigt sich am Beispiel von κ-Carrageen eine Verringerung der Wasserfreisetzung während der Lagerung, als Synärese bezeichnet. Die Synärese wird als Folge einer während der Lagerung nachlassenden Wasserimmobilisierung angesehen, die auf Strukturänderungen im Gel zurückgeht. Nach dem Erkalten von Gel aus Wasser und 3 Gew.-% erfindungsgemäß behandeltem κ-Carrageen und zum Vergleich von Gelen mit 2, 3 und 4 Gew.-% des ursprünglichen κ-Carrageens zeigt sich eine deutlich geringere Synärese für das Gel mit erfindungsgemäß behandeltem Hydrokolloid. Dazu wurden die erkalteten ausgebildeten Gele in verschlossenen Gefäßen bei 5 °C im Kühlschrank für maximal 4 Wochen gelagert. Zur Bestimmung der Synärese wurde jeweils ein Gel nach jeweils einer Woche vorsichtig aus dem Gefäß genommen und das Gewicht des ausgetretenen Wassers am Boden des Gefäßes bestimmt. Dabei wurde für jede Messung ein separates Gefäß mit Gel nur einmal verwendet und anschließend verworfen, so dass jede Messung unabhängig von den anderen ist. In Bezug zur anfänglichen Gesamtmasse jedes Gels (ca. 120 g) wurde die Synärese in Gew.-% berechnet.

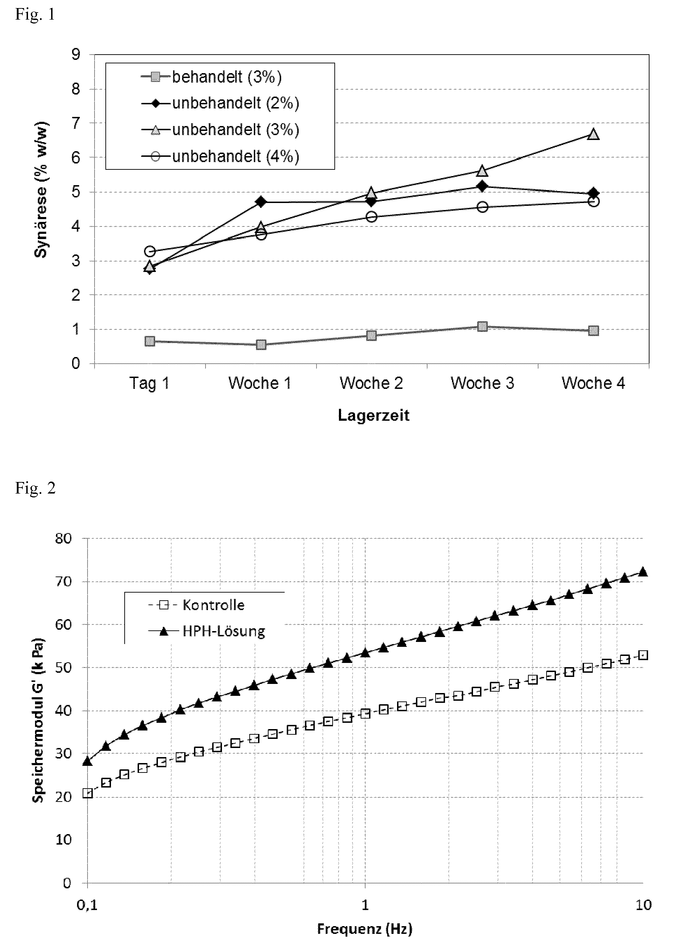

Die Figur 1 zeigt die Messwerte für 3 Gew.-%-ige Gele aus ursprünglichem κ-Carrageen (unbehandelt) und aus κ-Carrageen, das erfindungsgemäß bei 200 MPa hochdruckhomogenisiert wurde. Die Messwerte zeigen deutlich, dass das erfindungsgemäß behandelte κ-Carrageen eine erheblich verringerte Synärese nach 1 Tag für bis zu zumindest 4 Wochen gegenüber den Gelen aus ursprünglichem, nicht behandeltem κ-Carrageen aufweist.

Der Anteil des durch das Hydrokolloid fester gebundenen Wassers wurde anhand der nicht ausfrierbaren Feuchte quantifiziert, die mittels der dynamischen Differenzkalorimetrie (DSC) bestimmt wurde. Dabei wurden das Gel mit 3 % des ursprünglich eingesetzten Carrageens oder das Gel mit 3 % des erfindungsgemäß hochdruckhomogenisierten Carrageens bei -60 °C eingefroren und anschließend im DSC-Gerät die zum Auftauen erforderliche Wärmemenge gemessen. Mit der bekannten Gefrierenthalpie des Wassers konnte die Wassermasse bestimmt werden, die bis zu der Temperatur von -60 °C erstarrt war und entsprechend auftaute. Als fest gebundenes Wasser wurde die Wassermasse angesehen, die nicht zu Eiskristallen erstarrt war. Der Anteil des fest gebundenen Wassers bei dem Gel aus dem ursprünglich eingesetzten Carrageen betrug ca. 3 %, bei dem Gel des erfindungsgemäß hochdruckhomogenisierten Carrageens ca. 5 bis 10 %.

### Beispiel 2: Kochschinken mit Carrageen

Ein Kochschinken wurde mit der folgenden Zusammensetzung hergestellt:
Schulter (schier, Schwein) 5,000 kg
Wasser / Eis 2,412 kg
Nitritpökelsalz 0,160 kg
Dextrose 0,360 kg
κ-Carrageen 0,040 kg
Na-Diphosphat 0,024 kg
Na-Ascorbat 0,004 kg
Gesamtmasse 8,000 kg

Für einen Kochschinken mit erfindungsgemäß hergestelltem Hydrokolloid wurde κ-Carrageen eingesetzt, das nach Beispiel 1 bei 200 MPa hochdruckhomogenisiert wurde, und zum Vergleich das ursprüngliche Carrageen (Kontrolle).

Die mit dem erfindungsgemäßen Verfahren hergestellte Carrageenlösung wurde mit einem Zusatz von Dextrose (90% Dextrose, 10% Carrageen) als Träger sprühgetrocknet. Die Gesamtmasse an Dextrose in den Kochschinken mit erfindungsgemäß behandeltem κ-Carrageen und ursprünglichem κ-Carrageen wurde gleich eingestellt.

Das Fleisch wurde zunächst mittels einer Kombination aus Vorschneider, Messer und Vorscheider auf ca. 4 cm zerkleinert. Die anderen Inhaltsstoffe wurden in dem Eiswasser zur Lake angerührt und zusammen mit dem vorzerkleinerten Fleisch in einen herkömmlichen Tumbler (Trommeldrehachse horizontal, Fabrikat MGH-20, Fa. Valkona) gegeben und dort für 3 Stunden bei 20 U/min und 4 °C getumbelt. Die getumbelte Fleischmischung wurde in Sterildärme mit einem Durchmesser von 90 mm gefüllt und diese anschließend in einem Kessel bei 78 °C gebrüht, bis eine Kerntemperatur von 72 °C erreicht war.

Die Abkühlung nach dem Brühen erfolgte zunächst in Eiswasser und danach über Nacht im Kühlhaus bei 4 °C. Am nächsten Tag wurde die Hülle entfernt und die Kochverluste wurden anhand der Abtropfgewichte bestimmt. Die Werte sind in der nachfolgenden Tabelle wiedergegeben:

**Kochverluste von Kochschinken mit erfindungsgemäß behandeltem κ-Carrageen und im Vergleich mit unbehandeltem Carrageen:**

| Behandlung des Carrageeens | Wiederholung | Masse der Schinken (kg) | | Kochverlust | |
|---|---|---|---|---|---|
| | | Brutto | Netto | absolut (g) | relativ |
| hochdruckhomogenisiert | 1 | 1,776 | 1,770 | 6 | 0,34% |
| | 2 | 1,576 | 1,571 | 6 | 0,31% |
| ohne (Kontrolle) | 1 | 1,905 | 1,876 | 29 | 1,52% |
| | 2 | 1,883 | 1,852 | 31 | 1,67% |

Die Ergebnisse zeigen, dass bei dem erfindungsgemäß behandelten Carrageen der Kochverlust im Kochschinken signifikant reduziert wird, woraus sich eine deutlich gesteigerte Ausbeute und entsprechende wirtschaftliche Vorteile beim Anwender ergeben. In Kombination mit der geringeren Synärese ist zu erwarten, dass das erfindungsgemäß hochdruckhomogenisierte Hydrokolloid auch eine stabilere Lagerung bzw. höhere Qualität der Fleischware ergibt.

### Beispiel 3: Kochwurst mit Carrageen

Kochwurst wurde mit einem Verfahren, das an die industrielle Herstellung angepasst war, mit der folgenden Rezeptur hergestellt, einmal mit erfindungsgemäß bei 200 MPa hochdruckhomogenisiertem κ-Carrageen, entsprechend Beispiel 1 hergestellt, und einmal mit ursprünglichem κ-Carrageen (Kontrolle), wobei die Gesamtmasse an κ-Carrageen und Wasser jeweils gleich war:

| Komponente | Anteil in Rezeptur (kg) | |
|---|---|---|
| | Kontrolle | mit erfindungsgemäßem Carrageen |
| Leber | 2,000 | 2,000 |
| Schweinefleisch S II | 2,000 | 2,000 |
| Schweinefleisch S V | 3,500 | 3,500 |
| Schweinespeck S VIII | 1,500 | 1,500 |
| Wasser (95°C) | 0,980 | 0,333 |
| Salz | 0,180 | 0,180 |
| Carrageenlösung (3% w/w) | - | 0,667 |
| Carrageenpulver | 0,020 | |
| Gesamt | 10,180 | 10,180 |

Bei beiden Ansätzen wurde das Fleisch jeweils zunächst im Beutel bei 95 °C gegart. Danach wurde der komplette Beutelinhalt bei ca. 90 °C in einen Wolf gegeben und mit diesem auf eine Größe von 2 mm gewolft. Die Carrageen-Lösung mit einer Temperatur von ca. 55 bis 60 °C wurde zusammen mit dem Zusatzwasser in den Kutter dosiert. Beim Einsatz des Carrageenpulvers (Kontrolle) wurde dieses zusammen mit dem Wasser in den Kutter gegeben. Nachfolgend wurde das Gemisch jeweils fein gekuttert, wobei sich am Ende eine Temperatur von ca. 70 °C einstellte. Parallel zum Kuttern des Fleisches wurde die Leber bei 4 °C zusammen mit dem Salz in einem zweiten Gerät blasig gekuttert und bei ca. 45 °C in den ersten Kutter zum Fleisch hinzugefügt. Es wurde solange weiter gekuttert, bis die Leber vollständig fein verteilt war. Diese Masse wurde in Leberwurstdärme gefüllt und in einem Wasserbad von 78 °C bis zu einer Kerntemperatur von 72 °C gebrüht. Die Abkühlung der Würste erfolgte zunächst im Eiswasser und danach über Nacht im Kühlhaus bei 4 °C.

Die fertigen Würste wurden anschließend auf 7°C temperiert und bei dieser Temperatur rheologisch mittels Oszillation in einem Frequenzbereich zwischen 0,1 und 10 Hz vermessen. Dafür wurde ein Kegel-Platte-System mit einem Durchmesser von 4 cm und einem Kegelwinkel von 4 ° eingesetzt. Bei dieser Messmethode werden die Amplituden so klein gewählt, dass die Gele nur im linear-viskoelastischen Bereich beansprucht und die Strukturen damit nicht zerstört werden. Das gemessene Speichermodul G' ist ein Maß für die Festigkeit der Gele.

Das Ergebnis dieser Messungen ist in Figur 2 dargestellt. Es ist deutlich die höhere Festigkeit der Kochwurst mit dem erfindungsgemäßen κ-Carrageen (HPH-Lösung) gegenüber der Probe mit dem unbehandelten κ-Carrageen (Kontrolle) zu erkennen. Die mit dem erfindungsgemäßen κ-Carrageen erreichbare Festigkeitszunahme von ca. 29 % verdeutlicht das Einsparpotenzial des Zusatzes an κ-Carrageen, das durch das erfindungsgemäße Verfahren erreicht wird.

## Patentansprüche

1. Verfahren zur Herstellung eines Hydrokolloids mit erhöhtem Wasserbindevermögen, **gekennzeichnet durch** das Beaufschlagen einer Mischung des Hydrokolloids mit Wasser mit einer Druckdifferenz von zumindest 100 MPa und anschließender Entspannung der Druckdifferenz über zumindest eine Düse.

2. Verfahren nach Anspruch 1, **dadurch gekennzeichnet, dass** die Druckdifferenz zumindest 200 MPa beträgt.

3. Verfahren nach einem der voranstehenden Ansprüche, **dadurch gekennzeichnet, dass** die Mischung nach der Entspannung der Druckdifferenz eine Temperatur von zumindest der Lösetemperatur des Hydrokolloids in Wasser aufweist.

4. Verfahren nach einem der voranstehenden Ansprüche, **dadurch gekennzeichnet, dass** die Druckdifferenz über zumindest zwei Düsen entspannt wird und über jede Düse eine Druckdifferenz von zumindest 1 MPa entspannt wird.

5. Verfahren nach einem der voranstehenden Ansprüche, **dadurch gekennzeichnet, dass** das Hydrokolloid Carrageen, Xanthan, Stärke, Agar-Agar, Alginat, Johannisbrotkernmehl, Guarkernmehl, Pektin, Cellulose, Carboxymethylcellulose, Methylcellulose, Hydroxymethylcellulose, oder eine Mischung von zumindest zweien dieser ist.

6. Verfahren nach einem der voranstehenden Ansprüche, **dadurch gekennzeichnet, dass** die Mischung des Hydrokolloids mit Wasser vor Beaufschlagen der Mischung des Hydrokolloids mit Wasser mit der Druckdifferenz eine Suspension oder eine Lösung des Hydrokolloids bildet.

7. Verfahren nach einem der voranstehenden Ansprüche, **dadurch gekennzeichnet, dass** die Mischung des Hydrokolloids mit Wasser durch das Beaufschlagen mit der Druckdifferenz und durch die anschließende Entspannung der Druckdifferenz eine Temperatur von zumindest der Lösetemperatur des Hydrokolloids in Wasser aufweist, bevorzugt 55 °C bis 90 °C.

8. Verfahren nach einem der voranstehenden Ansprüche, **dadurch gekennzeichnet, dass** die Mischung des Hydrokolloids mit Wasser im Anschluß an das Entspannen der Druckdifferenz durch Sprühtrocknung oder Wirbelschichttrocknung getrocknet wird.

9. Verfahren nach einem der voranstehenden Ansprüche, **gekennzeichnet dadurch, dass** das Hydrokolloid anschließend an das Entspannen in eine Lebensmittelmasse eingemischt wird.

10. Verfahren nach Anspruch 9, **gekennzeichnet dadurch, dass** das Hydrokolloid vor dem Einmischen in die Lebensmittelmasse und/oder während des Einmischens in die Lebensmittelmasse in Mischung mit Wasser bis auf eine Temperatur erwärmt wird, bei der sich das Hydrokolloid löst.

11. Hydrokolloid mit erhöhtem Wasserbindevermögen, erhältlich nach einem Verfahren gemäß einem der Ansprüche 1 bis 9.

12. Lebensmittelmasse, die ein Hydrokolloid nach Anspruch 11 enthält.

13. Lebensmittelmasse, erhältlich nach einem Verfahren gemäß einem der Ansprüche 9 bis 10.
